# EUROPEAN PATENT APPLICATION

(11) **EP 2 843 614 A1**
(43) Date of publication of application: **04.03.2015**
(21) Application number: 14173458.2
(22) Date of filing: 23.06.2014
(51) Int. Cl.: G06Q 50/12

(54) **Room management apparatus and method**

(30) Priority: 26.08.2013 KR 20130101042
(71) Applicant: LG Electronics, Inc., Seoul 150-721 (KR)
(72) Inventor: Cho, Junghyun, 153-802 Seoul (KR)
(74) Representative: Vossius & Partner

(57) **Abstract**

Provided is a room management method. A room management method according to one aspect includes: receiving, by a central terminal, a service request of a room from a user terminal; analyzing, by the central terminal, the received service request to determine a manager terminal of a manager managing the room from which the service request has been received; and transmitting, by the central terminal, service request information to the determined manager terminal.

## Description

### BACKGROUND

Korean Patent Application Laid-open Publication No. 2013-0042849 discloses a hotel room management and control apparatus.

The above-mentioned prior art document discloses that a hotel room is provided with a temperature controller for independently controlling a temperature. Furthermore, the prior art document discloses that a guest may make various requests using a touchpad in the room.

However, although the prior art document discloses that a guest may request a service, the prior art document does not disclose a technology for effectively managing and processing the service request.

### SUMMARY

Embodiments provide a room management apparatus and method for rapidly processing a service request from a user by transferring the service request to a manager and for effectively managing a service processing history.

In one embodiment, a room management method includes: receiving, by a central terminal, a service request of a room from a user terminal; analyzing, by the central terminal, the received service request to determine a manager terminal of a manager managing the room from which the service request has been received; and transmitting, by the central terminal, service request information to the determined manager terminal.

The service request information may include a room number and a type of a requested service.

The service request information may further include a service request time.

The method may further include storing, by the central terminal, the service request information in a memory.

The method may further include receiving, by the central terminal, a service request receipt completion notification from the manager terminal.

The method may further include storing, by the central terminal, a time at which the service request receipt completion notification is received from the manager terminal in a memory.

The method may further include notifying, by the central terminal, the user terminal of service request receipt completion.

The method may further include display, by a display unit in the central terminal, one or more room information with service request reception notification information, wherein when the central terminal receives the service request receipt completion notification from the manager terminal, the service request reception notification information disappears from the one or more room information.

The method may further include: receiving, by the central terminal, a service processing completion notification from the manager terminal; and notifying, by the central terminal, the user terminal of service processing completion.

The method may further include: display, by a display unit in the central terminal, one or more room information with icon information for indicating the type of a receipt-completed service, wherein when the central terminal receives the service processing completion notification from the manager terminal, the icon information disappears from the one or more room information.

The method may further include storing, by the central terminal, a time at which the service processing completion notification is received from the manager terminal.

In another embodiment, a room management apparatus includes: a central terminal for communicating with a user terminal corresponding to a room and a manager terminal of a manager managing the room, wherein, when the central terminal receives a service request from the user terminal, the central terminal determines the manager terminal of the manager managing the room from which the service request has been received, and transmits push information for the service request to the determined manager terminal.

The central terminal may receive a service request receipt completion notification from the manager terminal.

The central terminal may notify the user terminal of service request receipt completion, upon receiving the service request receipt completion notification.

The central terminal may notify the user terminal of service processing completion, upon receiving a service processing completion notification from the manager terminal.

The push information may include a room number, a type of a requested service and a service request time.

The central terminal may include a memory for storing a time at which information is received from the user terminal or the manager terminal.

In further another embodiment, a room management apparatus includes: a central terminal configured to communicate with a user terminal corresponding to a room; and a plurality of manager terminals configured to communicate with the central terminal, wherein, when the central terminal receives a service request from the user terminal, the central terminal determines a manager terminal of a manager managing the room from which the service request has been received, and transmits push information for the service request to the determined manager terminal among the plurality of manager terminals.

According to an embodiment, when the central terminal receives a service request from the user terminal, the central terminal pushes the service request to the manager terminal of a manager who manages a corresponding room, and receives a notice of service request receipt completion from the manager, so that the service request may be rapidly processed by the manger.

Furthermore, when the central terminal receives a notice of service processing completion from the manager terminal, the notice of service processing completion is pushed to the user terminal, so that a user may easily check a result of processing the service request.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram illustrating a room management apparatus according to an embodiment.
Fig. 2 is a flowchart illustrating a room management method according to the embodiment.
Fig. 3 is a diagram illustrating a screen displayed on a display unit of a user terminal according to the embodiment.
Fig. 4 is a diagram illustrating a screen displayed on a display unit of a manager terminal according to the embodiment.
Fig. 5 is a diagram illustrating a management screen displayed on a display unit of a central terminal according to the embodiment.
Fig. 6 is a block diagram illustrating a room management apparatus according to another embodiment.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense.

Hereinafter, the embodiments will be described in detail with reference to the accompanying drawings.

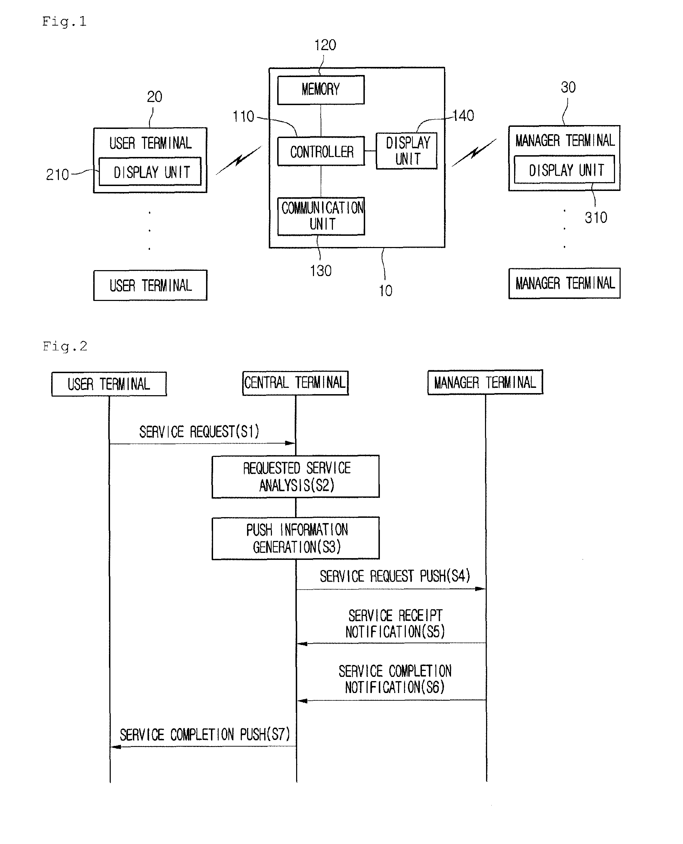

Fig. 1 is a block diagram illustrating a room management apparatus according to the embodiment.

Referring to Fig. 1, the room management apparatus according to the embodiment may manage rooms in a building, such as a hotel or a resort.

The room management apparatus may include a central terminal 10 for overall management of rooms, such as room assignment, and a manager terminal 30 used by a room manager.

The central terminal 10 may communicate with a user terminal 20 used by a user who stays in a room. The user terminal 20 may be a mobile terminal of the user, for example, a smartphone or a tablet. However, the type of the user terminal 20 is not limited, provided that the user terminal 20 is able to communicate with the central terminal 10.

In the case where the user terminal 20 is a mobile terminal, the user terminal 20 may wirelessly communicate with the central terminal 10 while a management application installed in the user terminal 20 is activated.

The user terminal 20 may include a display unit 210. While the management application is running, the display unit 210 may display room information. The display unit 210 will be described in more detail with reference to the drawings.

For another example, the user terminal 20 may be a room-dedicated terminal placed in a room. In this case, the user terminal 20 may communicate with the central terminal 10 wirelessly or by wire. Alternatively, the user terminal 20 may be a terminal provided by a company (e.g., a hotel) that operates rooms.

In the present disclosure, the user terminal 20 may serve as a user interface, and the room may be additionally provided with a room controller (room terminal) for controlling various devices in the room.

In the case where the user terminal 20 is a mobile terminal owned by the user, the room controller may include an input unit or a display unit for inputting a command or displaying information.

The user terminal 20 may exist in each room, and the central terminal 10 may communicate with a plurality of user terminals 20.

The manager terminal 30 is used by a manager to manage rooms, and each of a plurality of managers may carry the manager terminal 30. Thus, the central terminal 10 may communicate with a plurality of manager terminals 30.

The manager terminal 30 may include a display unit 310. The display unit 310 may display information on a room managed by a manager who carries the manager terminal 30. The display unit 310 will be described in more detail with reference to the drawings.

The central terminal 10 may include a controller 110, a memory 120, a communication unit 130 and a display unit 140. The communication unit 130 may communicate with the user terminal 20 and the manager terminal 30. For example, the communication unit 130 of a unitary type may enable communication with the user terminal 20 and the manager terminal 30. For another example, the communication unit 130 may include a fist communication unit for communicating with the user terminal 20 and a second communication unit for communicating with the manager terminal 30. Furthermore, the central terminal 10 may communicate with a web server accessible by a user.

The memory 120 may store various information related to room management. The memory 120 may store information received from the user terminal 20 and information received from the manager terminal 30. Furthermore, the memory 120 may store information input through the display unit 140 or an additional input unit.

The memory 120 may include manager information for each room. For example, the manager information for each room may include information on matching between a room and a manager who manages the room and information on the manager terminal 30 of each manager.

The controller 110 may control the display unit 140 on the basis of the information received from the user terminal 20 and the manager terminal 30.

When a service request is received from the user terminal 20 corresponding to a specific room, the controller 110 may determine the manager terminal 30 of a manager of the specific room, and may generate push information to be transmitted to the determined manager terminal 30.

Fig. 2 is a flowchart illustrating a room management method according to the embodiment.

Referring to Fig. 2, the central terminal 10 may receive a service request from the user terminal 10 corresponding to a specific room (operation S1). A service that may be requested may include an alarm service, a laundry service, a do-not-disturb service and a room cleaning service, but the service is not limited thereto.

When the central terminal 20 receives the service request, the controller 110 analyzes a requested service (operation S2). For example, the controller 110 determines a number of a room where the service request has been made, the type of the requested service and a service request time, and determines the manager terminal 30 of a manager who manages the room where the service request has been made.

Furthermore, the controller 110 generates push information to be transmitted to the determined manager terminal 30. The generated push information may include the room number and the type of the requested service. The generated push information may further include, if necessary, the service request time.

In the case where the service request received from the user terminal 20 includes a desired service completion time, the controller 110 may additionally determine the desired service completion time from the received service request, and may add the desired service completion time to the push information.

Next, the controller 110 controls the communication unit 130 so that the push information is transmitted to the determined manager terminal 30 (operation S4) (service request push). Here, the memory 120 of the central terminal 10 may store a time at which the push information is transmitted to the manager terminal 30 and transmission history information.

Then, the push information may be displayed on the display unit 310 of the manager terminal 30. The manager terminal 30 may receive a confirmation completion command of the push information displayed on the display unit 310.

When the confirmation completion command of the push information is input to the manager terminal 30, the manager terminal 30 notifies the central terminal 10 of service request receipt completion (operation S5). Here, the memory 120 of the central terminal 10 may store a time at which the service request receipt completion is notified.

A manager who carries the manager terminal 30 that has received the push information may process the requested service.

When the manager completes the processing of the requested service, the manager terminal 30 may receive a service processing completion command. Then, the manager terminal 30 notifies the central terminal 10 of service processing completion. Here, the memory 120 of the central terminal 10 may store a time at which the service processing completion is notified.

When the central terminal 10 is notified of the service processing completion, the controller 110 generates push information to be transmitted to the user terminal 20, and controls the communication unit 130 so that the push information is transmitted to the user terminal 20 (operation S7) (service completion push).

Although it has been described that the central terminal 10 notifies the user terminal 20 of the service processing completion when the processing of the service is completed, the central terminal 10 may additionally notify the user terminal 20 of service request receipt completion if the manager terminal 30 notifies the central terminal 10 of service request receipt.

According to the present embodiment, when the central terminal 10 receives a service request from the user terminal 20, the central terminal 10 pushes the service request to the manager terminal of a manager who manages a corresponding room, and receives a notice of service request receipt from the manager, so that the service request may be rapidly processed by the manager.

Furthermore, when the central terminal 10 receives a notice of service completion from the manager terminal 20, the notice of service completion is pushed to the user terminal 30, so that the user may easily check a result of processing the service request.

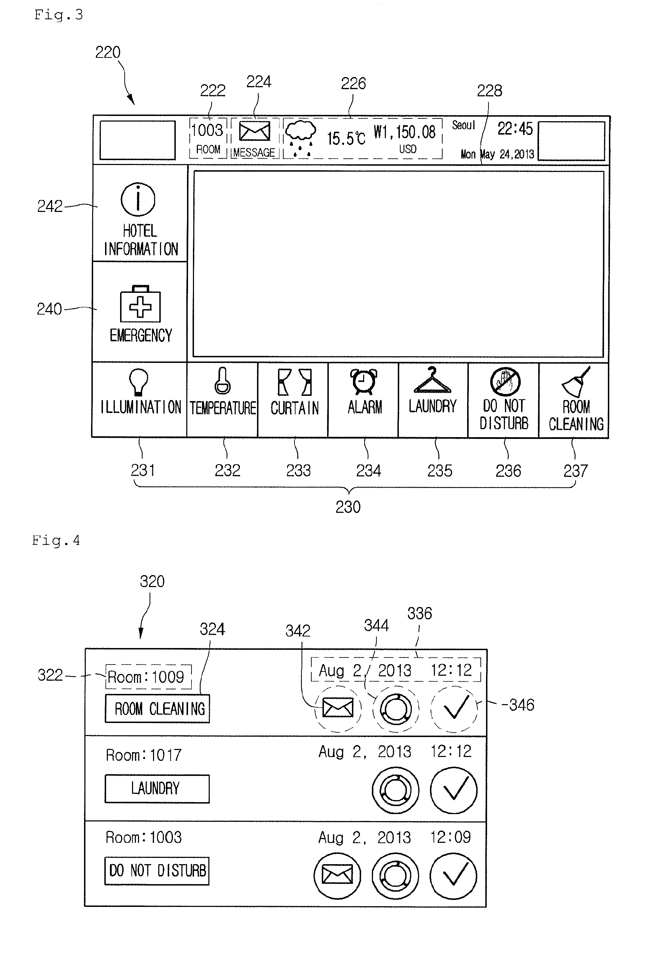

Fig. 3 is a diagram illustrating a screen displayed on the display unit of the user terminal according to the embodiment.

Referring to Fig. 3, the display unit 210 of the user terminal 20 may display a screen 220 for displaying information on a room where a guest stays. The screen 220 may be, for example, a touch screen and may receive a command according to a touch of a user.

The display unit 210 may display, on the screen 220, a room number 222 of the room where the user stays.

The display unit 210 may additionally display, on the screen 220, a push reception icon 224 for checking the push information received from the central terminal 10.

Furthermore, the display unit 210 may display, on the screen 220, additional information 225 such as the weather or exchange rate or time information.

The display unit 210 may additionally display, on the screen 220, a menu button 230 selectable by the user.

The menu button 230 may include at least one of control buttons 231 to 233 for controlling devices in the room and service request buttons 234 to 237 for requesting services.

The control buttons 231 to 233 may include at least one of an illumination button 231, a temperature button 232 and a curtain button 233, but the number and types of the control buttons 2331 to 233 are not limited.

The service request buttons 234 to 237 may include at least one of an alarm button 234, a laundry button 235, a do-not-disturb button 236 and a room cleaning button 237, but the number and types of the service request buttons 234 to 237 are not limited.

An alarm time and date may be selected by selecting the alarm button 234, and selected alarm information may be transmitted to the central terminal 10 so as to be stored in the memory 120 of the central terminal 10. The central terminal 10 may transmit push information for an alarm to the user terminal 20 at the received alarm date and time.

A laundry service may be requested by selecting the laundry button 235, wherein a time for collecting laundry or a desired laundry completion time may be selected.

A date at which a do-not-disturb service is required may be selected by selecting the do-not-disturb button 236.

A time for starting cleaning or a desired cleaning completion time may be selected by selecting the room cleaning button 237.

The display unit 210 may additionally display, on the screen 220, an emergency button 240 for urgently calling a manager or a hotel information button 242 for checking hotel information.

The display unit 210 may additionally display, on the screen 220, an information screen 228 for displaying various information.

While no command is input, an advertisement screen may be displayed on the information screen 228. Furthermore, when the user selects the button 224, 230 or 242, information corresponding to a selected button may be displayed. That is, information displayed on the information screen 228 may be variable.

For example, when the control button 231, 232 or 233 is selected, buttons for inputting commands for controlling devices may be displayed on the information screen 228.

When the service request button 234, 235, 236 or 237 is selected, buttons for inputting various information for requesting services may be displayed.

The number of received pieces of push information may be displayed on the push icon button 224. When the push icon button 224 is selected, the push information received from the central terminal 10 or the manager terminal 30. The push information received from the central terminal 10 may include at least service request receipt notification information and service processing completion information.

When the user checks the push information on the information screen 228, the user may input a confirmation completion command for individual push information. Here, when the confirmation completion command is input, the number of pieces of push information displayed on the push icon button 224 may be decreased.

Fig. 4 is a diagram illustrating a screen displayed on the display unit of the manager terminal according to the embodiment.

Referring to Fig. 4, the display unit 310 of the manager terminal 30 may display a screen 320 for displaying information on a room to be managed. The screen 320 may be, for example, a touch screen and may receive a command according to a touch of a user.

The display unit 310 may display, on the screen 320, a list of rooms managed by a manager and detailed information for each room. Here, the display unit 310 may divide the screen 320 into a plurality of areas, and may display information on one room on each area.

The display unit 310 may display, on the screen 320, a room number 322 and service request type information 324 of a corresponding room.

The display unit 310 may additionally display, on the screen 320, a service request time 336. Here, a service may be requested multiple times from one room. In this case, the display unit 310 may display, on the screen 320, all of a plurality of pieces of service request type information 324 and the service request time 336 of a last requested service.

For another example, even though a service is requested multiple times from one room, the display unit 310 may display, on the screen 320, the service request type information 324 of the last requested service and the service request time 336 of the last requested service.

The display unit 310 may display, on the screen 320, a receipt completion button 342 for inputting a service request receipt completion command and a processing completion button 346 for inputting a processing completion command of a requested service.

When the receipt completion button 342 displayed on the screen 320 is selected, the receipt completion button 342 may disappear from the screen 320.

When the processing completion button 346 is selected while the service request type information 324 is displayed on the screen 320, the service request type information 324 may disappear.

The display unit 310 may additionally display, on the screen 320, a history checking button 344 for checking a service request history. When the history checking button 344 is selected, the display unit 310 may display, on the screen 320, a history list of services requested from a corresponding room.

The service request history list may include, for example, processing-completed service request history information. For example, the processing-completed service request history information may include service request type information, a service request time and a service processing completion time.

In the case where the display unit 310 displays, on the screen 320, the type of a last service request among a plurality of received service requests, the service request history list may additionally include unprocessed service history information. The unprocessed service history information may include service request type information and a service request time. Here, the display unit 310 may receive a processing completion command of an unprocessed service request. In this case, the unprocessed service history information may additionally include a service processing completion time and may be changed to processing-completed service history information.

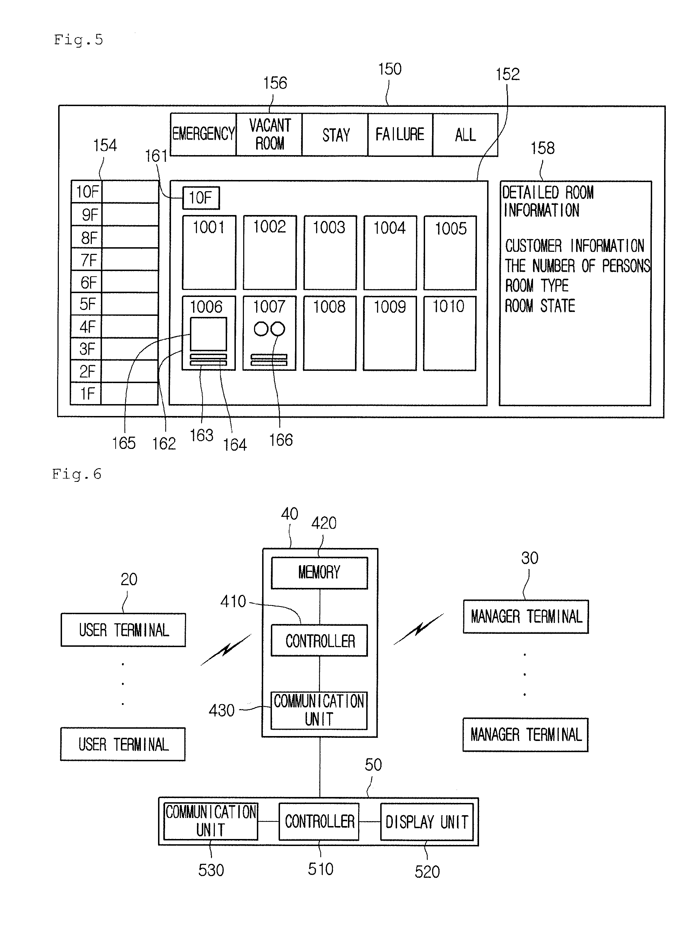

Fig. 5 is a diagram illustrating a management screen displayed on the display unit of the central terminal according to the embodiment.

Referring to Fig. 5, the display unit 140 may include a management screen 150 for managing rooms.

The management screen 150 may include at least one of a first area 152 for displaying room information, a second area 154 for separately displaying room information for each floor, a third area 156 for displaying a menu for showing rooms for each category, and a fourth area 158 for displaying detailed information of a room selected from among the rooms displayed on the first area 152.

The plurality of areas 152 to 158 may be simultaneously displayed on the management screen 150. Alternatively, a part of the plurality of areas 152 to 158 may be displayed on the management screen 150. For example, the first area 152 and at least one of the second to fourth areas 154 to 158 may be displayed on the management screen 150.

Floor information 161 and basic room information for each room of a specific floor may be displayed on the first area 152. Here, the first area 152 may display information of all the rooms, wherein the basic room information 162 of an assigned room and the basic room information 162 of an unassigned room may be distinguishably displayed.

The basic room information 162 may include a room number. The basic room information 162 of an unassigned room may not include any information excepting a room number (see room number 1001).

The basic room information 162 of an assigned room may include at least one of stay information 163 (e.g., date of stay and period of stay) and room temperature information 164 (see room number 1006).

Furthermore, the basic room information 162 of an assigned room may include service request reception notification information 165 (see room number 1006). The service request reception notification information 165 may include the type of a service. When the central terminal 10 receives a service request receipt completion notification from the manager terminal 30, the service request reception notification information 165 may disappear from the basic room information 162.

Furthermore, the basic room information 162 may include icon information 166 for indicating the type of a receipt-completed service (see room number 1007). The basic room information 162 may include a plurality of pieces of icon information 166. When the central terminal 10 receives a service completion notification from the manager terminal 30, the icon information of a processing-completed service may disappear from the basic room information 162.

Therefore, according to the present embodiment, a manager may easily check basic information of all the rooms by virtue of the basic room information displayed on the first area.

In the case where the first area 152 is unable to simultaneously display information of all the rooms, a scrollbar or an arrow may be displayed on the first area 152.

The second area 154 displays floor information for selecting a floor. When a specific floor is selected, the basic room information 162 of the selected floor may be displayed on the first area 152.

The third area 156 may display at least one of "emergency", "vacant room", "stay", "failure" and "all" buttons.

The emergency button is for checking a room from which a service request has been received. When the emergency button is selected, the basic room information 162 of a room from which a service request has been received may be displayed on the first area 152.

The vacant room button is for checking information of available rooms. When the vacant room button is selected, the basic room information 162 of an available room may be displayed on the first area 152.

The stay button is for checking information of assigned rooms, and the failure button is for checking information of rooms that cannot be assigned due to failure.

The all button is for sorting the basic room information 162 of all the rooms according to a specific criterion to check the basic room information 162.

The fourth area 158 may display detailed room information that may include customer information (name), the number of staying persons, a room type and a room state (temperature, cleaning state, and information on whether devices are turned on/off).

Fig. 6 is a block diagram illustrating a room management apparatus according to another embodiment.

Referring to Fig. 6, the room management apparatus according to the other embodiment may include a central terminal 40 and a manager interface 50 connected to the central terminal 40 to enable a user to check room information and input commands.

The central terminal 40 may communicate with the user terminal 10 and the manager terminal 30. The central terminal 40 serves as a central server.

The central terminal 40 may include a controller 410, a memory 420 and a communication unit 430. Although the central terminal 40 is different from the above-mentioned central terminal 10 in that the communication unit 430 communicates with the manager interface 50, the controller 410 and the memory 420 are the same as the controller and the memory of the previous embodiment. Thus, detailed descriptions of the central terminal 40 are omitted.

The manager interface 50 may include a controller 510, a display unit 520 and a communication unit 530. The communication unit 530 may communicate with the communication unit 430 of the central terminal 40. Information displayed on the display unit 520 is the same as the information displayed on the display unit 140 of the central terminal 10 of the previous embodiment. The controller 510 may control the display unit 520. In the present embodiment, the manager interface 50 may be a PC, but is not limited thereto.

Here, the manager interface 50 may be referred to as a common interface, and the manager terminal carried by a manager may be referred to as an individual interface. That is, the common interface may allow a user to check information of all the rooms, and the individual interface may allow a user to check information of some rooms managed by a manager.

However, if necessary, the individual interface may allow a user to check information of all the rooms.

## Claims

1. A room management method comprising:
receiving, by a central terminal (10), a service request of a room from a user terminal (20);
analyzing, by the central terminal (10), the received service request to determine a manager terminal (30) of a manager managing the room from which the service request has been received; and
transmitting, by the central terminal (10), service request information to the determined manager terminal (30).

2. The room management method according to claim 1, wherein the service request information comprises a room number and a type of a requested service, and, preferably, further comprises a service request time.

3. The room management method according to claim 1 or 2, further comprising storing, by the central terminal (10), the service request information in a memory (120).

4. The room management method according to any one of preceding claims, further comprising receiving, by the central terminal (10), a service request receipt completion notification from the manager terminal (30).

5. The room management method according to claim 4, further comprising storing, by the central terminal (10), a time at which the service request receipt completion notification is received from the manager terminal (30) in a memory (120).

6. The room management method according to claim 4 or 5, further comprising notifying, by the central terminal (10), the user terminal (20) of service request receipt completion.

7. The room management method according to any of claims 4 to 6, further comprising:
displaying, by a display unit (140) in the central terminal (10), room information on one or more rooms, including service request reception notification information; and
removing said service request reception notification information from the room information when the central terminal (10) receives the service request receipt completion notification from the manager terminal (30).

8. The room management method according to any one of preceding claims, further comprising:
receiving, by the central terminal (10), a service processing completion notification from the manager terminal (30); and
notifying, by the central terminal (10), the user terminal (20) of service processing completion.

9. The room management method according to claim 8, further comprising:
displaying, by a display unit in the central terminal (10), room information on one or more rooms, including icon information (166) for indicating the type of a receipt-completed service request; and
removing said icon information from the room information when the central terminal (10) receives the service processing completion notification from the manager terminal (30).

10. The room management method according to claim 8 or 9, further comprising storing, by the central terminal (10), a time at which the service processing completion notification is received from the manager terminal (30).

11. A room management apparatus comprising:
a central terminal (10) for communicating with a user terminal (20) corresponding to a room and a manager terminal (30) of a manager managing the room,
wherein the central terminal is configured: upon receiving a service request from the user terminal (20), to determine the manager terminal (30) of the manager managing the room from which the service request has been received; and to transmit push information for the service request to the determined manager terminal (30).

12. The room management apparatus according to claim 11, wherein the central terminal (10) is configured to receive a service request receipt completion notification from the manager terminal (30).

13. The room management apparatus according to claim 12, wherein the central terminal (10) is configured to notify the user terminal (20) of service request receipt completion upon receiving the service request receipt completion notification.

14. The room management apparatus according to any of claims 11 to 13, wherein the central terminal (10) is configured to notify the user terminal (20) of service processing completion upon receiving a service processing completion notification from the manager terminal (30).

15. The room management apparatus according to any one of claims 11 to 14, wherein the push information comprises a room number, a type of a requested service and a service request time.

16. The room management apparatus according to any of claims 11 to 15, wherein the central terminal (10) comprises a memory (120) for storing a time at which information is received from the user terminal (20) or the manager terminal (30).
